(19) Europäisches Patentamt
European Patent Office
Office européen des brevets

(11) EP 2 495 736 A1

(12) **EUROPEAN PATENT APPLICATION**
published in accordance with Art. 153(4) EPC

(43) Date of publication:
**05.09.2012 Bulletin 2012/36**

(21) Application number: **10826854.1**

(22) Date of filing: **29.10.2010**

(51) Int Cl.:
***H01B 13/00*** *(2006.01)* ***H01B 1/06*** *(2006.01)*
***H01M 8/02*** *(2006.01)* ***H01M 8/10*** *(2006.01)*

(86) International application number:
**PCT/JP2010/069292**

(87) International publication number:
**WO 2011/052724 (05.05.2011 Gazette 2011/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.10.2009 JP 2009250559**

(71) Applicant: **Sumitomo Chemical Company, Limited**
**Tokyo 104-8260 (JP)**

(72) Inventors:
- **KOYAMA, Atsunobu**
  **Osaka-shi**
  **Osaka 533-0003 (JP)**
- **SHUDO, Atsushi**
  **Osaka 560-0045 (JP)**

(74) Representative: **Vossius & Partner**
**Siebertstrasse 4**
**81675 München (DE)**

(54) **METHOD FOR PRODUCING SOLID ELECTROLYTE FILM**

(57) Disclosed is a method for producing a solid electrolyte film, which comprises: a formation step (A) in which a film that contains an electrolyte polymer is formed on a base; a separation step (B) in which the film formed on the base is separated from the base; a water washing step (C) in which the film obtained in the separation step (B) is water washed, while applying a tension ($T_C$) to the film; a drying step (D) in which the film obtained in the water washing step (C) is dried, while applying a tension ($T_D$) to the film. The method for producing a solid electrolyte film is characterized in that the tension ($T_C$) and the tension ($T_D$) satisfy the relation: ($T_C$) < ($T_D$).

EP 2 495 736 A1

## Description

### Technical Field

The present invention relates to a method for producing a solid electrolyte film.

### Background Art

It is known that solid electrolyte films made from a polymer having proton conductivity are used as a conductive film for fuel cells.

As a method for producing such solid electrolyte films, Patent Document 1 discloses a method wherein a step of forming a film comprising a solid electrolyte on a base material, a step of separating the formed film from the base material, a step of washing the separated film with water and a step of drying the washed film are carried out, and then the resulting film is rolled up with applying a tensile force to the film.

### Background Art Document

### Patent Document

Patent Document 1: JP 2008-282795 A

### Summary of Invention

According to the method disclosed in Patent Document 1, however, the method was not satisfactory in that it is difficult to inhibit the appearance of wrinkles during the step of washing the film with water and the step of drying the film. The present invention has an object to provide a method that can produce a solid electrolyte film without generation of wrinkles during a step of washing the film separated from a base material and a step of drying the film.

The present invention provides, for example, the followings:

[1] a method for producing a solid electrolyte film, which comprises
a formation step (A) in which a film comprising an electrolyte polymer is formed on a base material,
a separation step (B) in which the film formed on the base material is separated from the base material,
a water washing step (C) in which the film obtained in the separation step (B) is washed with water while applying a tensile force $T_C$ to the film, and
a drying step (D) in which the film obtained in the water washing step (C) is dried while applying a tensile force To to the film,
characterized in that the tensile force $T_C$ and the tensile force $T_D$ satisfy the relationship of $T_C<T_D$;
[2] the method according to [1], wherein the tensile force $T_C$ is from 0.0001 N/mm to 2 N/mm, and the tensile force $T_D$ is from 0.001 N/mm to 10 N/mm;
[3] the method according to [1], wherein the tensile force $T_C$ is from 0.005 N/mm to 0.03 N/mm, and the tensile force $T_D$ is from 0.01 N/mm to 0.05 N/mm;
[4] the method according to [2], wherein a thickness of the film obtained via the water washing step (C) and a thickness of the film obtained via the drying step (D) are both in the range between 0.001 mm and 0.5 mm;
[5] the method according to [3], wherein a thickness of the film obtained via the water washing step (C) and a thickness of the film obtained via the drying step (D) are both in the range between 0.001 mm and 0.1 mm;
[6] the method according to any one of [1] to [5], wherein the tensile force $T_C$ and the tensile force $T_D$ are applied by a tension cut;
[7] the method according to any one of [1] to [6], characterized in that the electrolyte polymer comprises a block having an ion-exchange group and a block having substantially no ion-exchange group, a main chain of said block having an ion-exchange group comprises a polyarylene structure in which a plurality of aromatic rings are directly linked and the ion-exchange group is directly bonded to the aromatic ring constituting the main chain;
[8] the method according to [7], characterized in that the block having an ion-exchange group is represented by the following general formula (1)

[Chemical Formula 1]

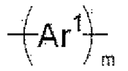 (1)

wherein m is an integer of 5 or more, $Ar^1$ represents a divalent aromatic group, the divalent aromatic group may be substituted with a fluorine atom, an alkyl group having 1 to 20 carbon atoms which may have a substituent, an alkoxy group having 1 to 20 carbon atoms which may have a substituent, an aryl group having 6 to 20 carbon atoms which may have a substituent, an aryloxy group having 6 to 20 carbon atoms which may have a substituent or an acyl group having 2 to 20 carbon atoms which may have a substituent, and at least one ion-exchange group is directly bonded to the aromatic ring constituting the main chain of $Ar^1$,

[9] the method according to [7] or [8], characterized in that the block having substantially no ion-exchange group comprises a structural unit represented by the following general formula (2);

[Chemical Formula 2]

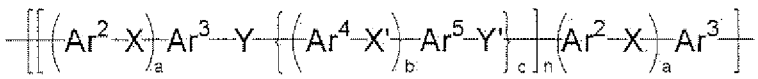 (2)

wherein a, b and c each independently represent 0 or 1, n is an integer of 5 or more, $Ar^2$, $Ar^3$, $Ar^4$ and $Ar^5$ each independently represent a divalent aromatic group, the divalent aromatic group may be substituted with an alkyl group having 1 to 20 carbon atoms which may have a substituent, an alkoxy group having 1 to 20 carbon atoms which may have a substituent, an aryl group having 6 to 20 carbon atoms which may have a substituent, an aryloxy group having 6 to 20 carbon atoms which may have a substituent or an acryl group having 2 to 20 carbon atoms which may have a substituent, X and X' each independently represent a direct bonding or a divalent group, and Y and Y' each independently represent an oxygen atom or a sulfur atom,

[10] a solid electrolyte film produced by the method according to any one of [1] to [9].

Effect of the Invention

The solid electrolyte film can be produced without generation of wrinkles in the steps of washing with water and of drying the film separated from the base material by controlling the tensile force $T_C$ in the water washing step and the tensile force $T_D$ in the drying step as described above.

Description of Embodiments

The present invention comprises a formation step (A), a separation step (B), a water washing step (C) and a drying step (D), and can comprise an acid treatment step (B') between the separation step (B) and the water washing step (C), and can comprise a wind-up step (E) after the drying step (D). The above-mentioned steps can be carried out in a step-by-step manner (for example, the separation step (B) is carried out after finishing the formation step (A), the water washing step (C) is carried out after finishing the separation step (B) and the like), and alnatively, a plurality of steps can be carried out continuously (for example, the formation step (A), the separation step (B), the water washing step (C) and the drying step (D) are continuously carried out). It is preferable in view of productivity to carry out a plurality of steps continuously, and more preferable to carry out all steps continuously. Hereinafter, the present invention will be described with exemplifying an embodiment in which all steps are carried out continuously.

In each step, a tensile force is applied in the longitudinal direction of the film. The tensile force in each step can be changed by such means as providing a tension cut between steps. The tension cut includes a roller in which a motor, a clutch, a brake and the like are arranged, and preferably has a detecting means of detecting a tensile force applied to the film.

The roller used in the tension cut includes, for example, a nip roller, a suction roller or a combination of a plurality of rollers.

The nip roller nips the film by rollers and controls the feed speed of the film by a frictional force resulting from the nip pressure so that the pressure applied to the film can be changed before and after the rollers.

The suction roller attracts the film by suctioning the interior of a roller which has a number of holes on the surface or a roller on which a wire are winded in a net-like or duckboard-like form and by allowing the interior to have a negative

pressure, and controls the feed speed of the film by a frictional force caused by the resulting suction force so that the pressure applied to the film can be changed before and after the roller.
Also, by combining and synchronously-driving a plurality of rollers, the pressure applied to the film can be changed before and after the rollers depending on a contact angle of the film to the rollers.

A tensile force [N/mm], a tensile load [N], a film width [mm], a film thickness [mm] and a tensile force per unit thickness [N/mm$^2$] applied to a film are represented by the following equations;

$$(\text{Tensile force [N/mm]}) = (\text{Tensile load [N]}) / (\text{Film width [mm]})$$

$$(\text{Tensile force per unit thickness [N/mm}^2\text{]}) = (\text{Tensile force [N/mm]}) / (\text{Film thickness [mm]})$$

wherein the tensile load means a load applied to the film, the tensile force means the tensile load per unit width of the film, and the tensile force per unit thickness means the tensile force per unit thickness of the film.

The film thickness may change during each step and between steps. However, the thickness of the film obtained via the water washing step (C) and the thickness of the film obtained via the drying step (D) are both preferably in the range between 0.001 mm and 1 mm, more preferably in the range between 0.001 mm and 0.5 mm, further preferably in the range between 0.001 mm and 0.1 mm.

Preferably, the tensile force $T_C$ in the water washing step (C), the tensile force $T_D$ in the drying step (D) and a tensile force $T_E$ in the wind-up step (E) are low enough to avoid an elongation or a break of the film, and large enough to prevent the appearance of wrinkles on the film. The tensile force applied to the film is preferably 50% or less of the yield stress of the film.

[Formation Step (A) ]

An electrolyte polymer is dissolved in a solvent, and the resulting solution is cast on a base material to form a film comprising the electrolyte polymer on the base material. Examples of the solvent are aprotic polar solvents such as N,N-dimethylformamide (DMF), N,N-dimethylacetamide (DMAc), N-methylpyrrolidone (NMP) and dimethylsulfoxide (DMSO), chlorinated solvents such as dichloromethane, chloroform, 1,2-dichloroethane, chlorobenzene and dichlorobenzene, alcohol solvents such as methanol, ethanol and propanol, alkylene glycol monoalkyl ethers such as ethylene glycol monomethyl ether, ethylene glycol monoethyl ether, propylene glycol monomethyl ether or propylene glycol monoetyl ether. Those can be used alone; however, 2 or more of these solvents can be optionally used in combination. The solvent preferably contains the aprotic polar solvent, and is more preferably DMSO in view of high solubility of polyarylene-based block copolymers which are preferable electrolyte polymers as described below. Concentration of the electrolyte polymer in the solution is preferably from 1 to 20% by weight, more preferably from 5 to 10% by weight. Additives may be added to the solution. Examples of the additives are such as plasticizers, stabilizers, mold release agents and water retention agents which can be used for polymers. It is preferable in view of the improvement of the film strength to remove a part of the solvent from the solution cast on the base material by predrying the solution cast on the base material, that is, by evaporating a part of the solvent prior to the separation step (B). A temperature in the predrying is preferably from 40 to 150°C. The predrying time is preferably 50 minutes or less (for example, from 1 minute to 50 minutes) in view of the improvement of the ionic conductivity in the resulting solid electrolyte film. The organic solvent contained in the film after the predrying is preferably 60% by weight or less, more preferably 40% by weight or less on the basis of the film.

[Separation Step (B)]

The film formed on the base material is separated from the base material. The tensile force in this step (B) is preferably 10 N/mm or less, more preferably 6 N/mm or less, further preferably from 0.005 N/mm to 5 N/mm, even more preferably from 0.01 N/mm to 1 N/mm. The tensile force per unit thickness in this step (B) is preferably 20 N/mm$^2$ or

less, more preferably 12 $N/mm^2$ or less, further preferably from 1 $N/mm^2$ to 10 $N/mm^2$. The film is separated from the base material by this tensile force.

[Water washing step (C)]

The film obtained in the separation step (B) is washed with water while applying a tensile force $T_C$ to the film. The tensile force $T_C$ in the water washing step (C) is preferably from 0.0001 N/mm to 2 N/mm, more preferably from 0.001 N/mm to 1 N/mm, further preferably from 0.002 N/mm to 0.2 N/mm, even more preferably from 0.005 N/mm to 0.03 N/mm. When the tensile force $T_C$ is from 0.0001 N/mm to 2 N/mm, the film thickness is preferably in the range between 0.001 mm and 0.5 mm, and when the tensile force is from 0.005 N/mm to 0.03 N/mm, the film thickness is preferably in the range between 0.001 mm and 0.1 mm. The tensile force per unit thickness in the water washing step (C) is preferably from 0.1 $N/mm^2$ to 4 $N/mm^2$, more preferably from 0.2 $N/mm^2$ to 2 $N/mm^2$. When the water washing step (C) is carried out in a plurality of stages, the tensile force in a former stage may be the same as that in a latter stage; however, the tensile force in a latter stage is preferably increased relative to that in a former stage. A cleaning liquid used is preferably water containing no metallic ion component, and more preferably water having a resistivity of 17 MΩ·cm or more at 25°C. The water exhibiting such resistivity can be obtained by commercially available pure water production apparatus. The water-washing temperature is selected in the range between 0 and 100°C, and is preferably between 5 and 80°C, more preferably between 10 and 60°C. The water-washing time may be generally from 10 seconds to 30 minutes, for example, from 20 seconds to 10 minutes. The water washing can be carried out by, for example, soaking the film in water.

[Drying Step (D)]

The film obtained in the water washing step (C) is dried while applying a tensile force $T_D$ to the film. The tensile forces $T_C$ and $T_D$ are adjusted so as to satisfy the relationship of $T_C<T_D$. The tensile force $T_D$ in the drying step (D) is preferably from 0.001 N/mm to 10 N/mm, more preferably from 0.005 N/mm to 5 N/mm, further preferably from 0.01 N/mm to 1 N/mm, even more preferably from 0.01 N/mm to 0.05 N/mm within the range satisfying the relationship of $T_C<T_D$. When the tensile force $T_D$ is from 0.001 N/mm to 10 N/mm, the film thickness is preferably in the range between 0. 001 mm and 0.5 mm, and when the tensile force is from 0.01 N/mm to 0.05 N/mm, the film thickness is preferably in the range between 0.001 mm and 0.1 mm. The tensile force per unit thickness in the drying step (D) is preferably from 0.2 $N/mm^2$ to 20 $N/mm^2$, more preferably from 1 $N/mm^2$ to 10 $N/mm^2$. When the drying step (D) is carried out in a plurality of stage, the tensile force in a former stage may be the same as that in a latter stage; however, the tensile force in a latter stage is preferably increased relative to that in a former stage. The drying temperature is preferably from 20 to 90°C. The drying time may be generally from 10 seconds to 30 minutes, for example, from 20 seconds to 10 minutes. The drying can be carried out by, for example, circulating a gas such as nitrogen and air having the above-mentioned drying temperature.

[Acid Treatment Step (B')]

Optionally, an acid treatment step (B') may be used between the separation step (B) and the water washing step (C). The acid treatment is carried out by soaking the film obtained in the separation step (B) in an acidic solution. Examples of the acidic solution are hydrochloric acid, sulfuric acid and nitric acid. The normality of the acidic solution is preferably from 0.5 N (normal) to 4 N (normal). The acid-treatment temperature is preferably from 0 to 80°C. The acid-treatment time (the contact time between the film and the acidic solution) is preferably from 5 minutes to 10 hours. The tensile force in the acid treatment step (B') is preferably from 0.0002 N/mm to 2 N/mm, more preferably from 0.001 N/mm to 1 N/mm, further preferably from 0.002 N/mm to 0.2 N/mm, even more preferably from 0.005 N/mm to 0.03 N/mm. The tensile force per unit thickness in the acid treatment step (B') is preferably from 0.1 $N/mm^2$ to 4 $N/mm^2$, more preferably from 0.2 $N/mm^2$ to 2 $N/mm^2$.

[Wind-up Step (E)]

Optionally, a step of winding up the film (E) may be used after the drying step (D). The film after drying is winded up while applying a tensile force $T_E$ to the film. At this time, the tensile force $T_E$ is adjusted so as to satisfy the relationship of $T_C<T_D<T_E$. The tensile force $T_E$ in the wind-up step (E) is preferably from 0.0015 N/mm to 15 N/mm, more preferably from 0.003 N/mm to 3 N/mm, further preferably from 0.01 N/mm to 0.1 N/mm. The tensile force per unit thickness in the wind-up step (E) is preferably from 0.3 $N/mm^2$ to 30 $N/mm^2$. In addition, the tensile force is preferably changed over the period from the beginning to the ending of the wind-up, and the tensile force is preferably decreased with increasing the roll diameter.

In the method of the present invention, the electrolyte polymer means a polymer comprising an ion-exchange group to the extent that it exhibits ionic conductivity when used as a conductive membrane in a fuel cell. Especially, the polymer preferably comprises an ion-exchange group which exhibits proton conductivity (a proton-exchange group). Such ion-exchange group includes such as a sulfonic acid group ($-SO_3H$), a sulfonylimide group ($-SO_2-NH-SO_2-$), a phosphonic acid group ($-PO_3H_2$), a phosphoric acid group ($-OPO_3H_2$) and a carboxyl group (-COOH), and a sulfonic acid group is preferable.

The introduction amount of the ion-exchange group in the above-mentioned electrolyte polymer is preferably from 0.5 meq/g to 4.0 meq/g, more preferable from 1.0 meq/g to 2.8 meq/g, in terms of the number of the ion-exchange group per unit mass of the electrolyte polymer, that is, an ion-exchange capacity. A electrolyte polymer having an ion-exchange capacity of 0.5 meq/g or more, which represents said introduction amount of the ion-exchange group, exhibits sufficient ionic conductivity. On the other hand, a electrolyte polymer having an ion-exchange capacity of 4.0 meq/g or less exhibits better water resistance. Therefore, both are preferable since they have more excellent properties as an electrolyte polymer for a fuel cell.

The above-mentioned electrolyte polymer includes fluorine-containing electrolyte polymer as typified by Nafion (the registered trade mark of DuPont) and hydrocarbon-based electrolyte polymer, and the hydrocarbon-based electrolyte polymer is especially preferable.

The hydrocarbon-based polymer includes, for example, engineering resins comprising an aromatic ring in the main chain of such as polyether ether ketone, polyether ketone, polyether sulfone, polyphenylene sulfide, polyphenylene ether, polyether ether sulfone, polyphenylene, polyimide, as well as polymers in which the proton-exchange group exemplified above is introduced to a general-purpose resin such as polyethylene and polystyrene.

The hydrocarbon-based electrolyte polymer is typically a compound comprising no halogen atom such as fluorine; however, it may partially comprise fluorine atom. The polymer comprising substantially no fluorine atom has an advantage that it is cheaper relative to fluorine-containing polymer electrolytes. In the composition ratio of elements constituting the electrolyte polymer, 15% by mass or less of fluorine atom is more preferable.

As the above-mentioned hydrocarbon-based electrolyte polymer, a polymer comprising an aromatic ring in the main chain is preferable, and especially, preference is given to a polymer which comprises an aromatic ring constituting the main chain and in which an ion-exchange group is directly bonded to said aromatic ring, or a polymer comprising an ion-exchange group indirectly bonded via the other atom or atom group, or a polymer comprising an aromatic ring constituting the main chain and comprising a side chain having an aromatic ring, or a polymer comprising an ion-exchange group directly bonded to either of an aromatic ring constituting the main chain or an aromatic ring in the side chain.

Furthermore, in view of the heat resistance, preference is given to a hydrocarbon-based electrolyte polymer which is aromatic-hydrocarbon-based polymer comprising an ion-exchange group and comprising an aromatic ring in the main chain.

The hydrocarbon-based electrolyte polymer is preferably a copolymer which comprises and is combination of a repeating unit comprising an ion-exchange group and a repeating unit not comprising an ion-exchange group, wherein the ion-exchange capacity is in the range described above in view of good mechanical strength which is achieved by a solid electrolyte film in case the solid electrolyte comprising the hydrocarbon-based electrolyte polymer is obtained. A copolymerization format in such copolymer may be any of a random copolymerization, a block copolymerization, a graft copolymerization or an alternating copolymerization, or may be a structure in which these copolymerization formats are combined. The hydrocarbon-based electrolyte polymer is preferably a block copolymer, and more preferably a polyarylene-based block copolymer described below.

Preferably, the polyarylene-based block copolymer comprises at least one block having an ion-exchange group and at least one block having substantially no ion-exchange group, the main chain of the block having an ion-exchange group comprises a polyarylene structure in which a plurality of aromatic rings are directly linked, and the ion-exchange group is directly bonded to the aromatic ring constituting the main chain. Here, "main chain of a block" refers to a molecular chain which can be made into a main chain of a polyarylene-based block copolymer when said copolymer is formed, and '"polyarylene structure" refers to a structure in which a plurality of aromatic rings are linked with each other via a direct bonding (single bonding) as described above.

Furthermore, in the polyarylene-based block copolymer, the block having an ion-exchange group preferably comprises a structural unit represented by the following general formula (1) ;

[Chemical Formula 3]

$$-\left(Ar^1\right)_m- \quad (1)$$

wherein m is an integer of 5 or more, $Ar^1$ represents a divalent aromatic group, the divalent aromatic group may be substituted with a fluorine atom, an alkyl group having 1 to 20 carbon atoms which may have a substituent, an alkoxy group having 1 to 20 carbon atoms which may have a substituent, an aryl group having 6 to 20 carbon atoms which may have a substituent, an aryloxy group having 6 to 20 carbon atoms which may have a substituent or an acyl group having 2 to 20 carbon atoms which may have a substituent, and at least one ion-exchange group is directly bonded to an aromatic ring constituting the main chain of $Ar^1$.

Furthermore, in the polyarylene-based block copolymer, the block having substantially no ion-exchange group preferably comprises a repeating structure represented by the following general formula (2);

[Chemical Formula 4]

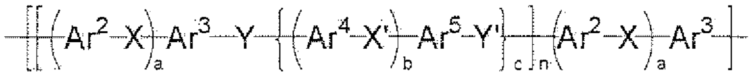

(2)

wherein a, b and c each independently represent 0 or 1, n is, an integer of 5 or more, $Ar^2$, $Ar^3$, $Ar^4$ and $Ar^5$ each independently represent a divalent aromatic group, the divalent aromatic group may be substituted with an alkyl group having 1 to 20 carbon atoms which may have a substituent, an alkoxy group having 1 to 20 carbon atoms which may have a substituent, an aryl group having 6 to 20 carbon atoms which may have a substituent, an aryloxy group having 6 to 20 carbon atoms which may have a substituent or an acyl group having 2 to 20 carbon atoms which may have a substituent, X and X' each independently represent a direct bonding or a divalent group, and Y and Y' each independently represent an oxygen atom or a sulfur atom.

The block having an ion-exchange group preferably comprises a structural unit in which m in the general formula (1) is 20 or more.

The ion-exchange group is preferably an acidic group, and an acid group which is either of a sulfonic acid group, a sulfonimide group, a phosphonic acid group, a phosphoric acid group or a carboxylic acid group is preferable.

As the ion-exchange group, a sulfonic acid group which has a high acidity is preferable, and the block having the ion-exchange group preferably comprises a structural unit represented by the following general formula (3);

[Chemical Formula 5]

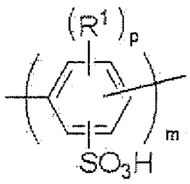

(3)

wherein m is defined similar to that in the general formula (1), $R^1$ represents a substituent selected from a fluorine atom, an alkyl group having 1 to 20 carbon atoms which may have a substituent, an alkoxy group having 1 to 20 carbon atoms which may have a substituent, an aryl group having 6 to 20 carbon atoms which may have a substituent, an aryloxy group having 6 to 20 carbon atoms which may have a substituent or an acyl group having 2 to 20 carbon atoms which may have a substituent, and p is an integer of 0 or more and 3 or less. Here, the phenylene group constituting the main chain of the block may comprise the substituent $R^1$, and said substituent is preferable a group which does not substantially react in a polymerization reaction. In addition, if p is 2 or 3, a plurality of $R^1$ present in the same benzene ring may be the same or different. In said block, $R^1$ and p per one repeating unit may be the same or different, respectively.

As described above, in the method of the present invention, the block having an ion-exchange group in the polyarylene-based block copolymer preferably has a sulfonic acid group, which is a preferable ion-exchange group, and has a high degree of polymerization m in the general formula (1), and the block having a ion-exchange group more preferably comprises a structural unit represented by the following general formula (4) ;

[Chemical Formula 6]

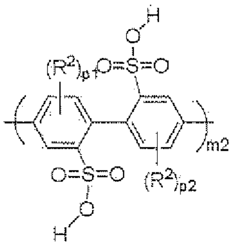

(4)

wherein $R^2$ represents a substituent selected from a fluorine atom, an alkyl group having 1 to 20 carbon atoms which may have a substituent, an alkoxy group having 1 to 20 carbon atoms which may have a substituent, an aryl group having 6 to 20 carbon atoms which may have a substituent, an aryloxy group having 6 to 20 carbon atoms which may have a substituent or an acyl group having 2 to 20 carbon atoms which may have a substituent, m2 is an integer of 3 or more, p1 and p2 are an integer of 0 or more and 3 or less, respectively. In addition, in the general formula (4), the phenylene group constituting the main chain of the block may comprise the substituent $R^2$, and said substituent is preferably a group which does not substantially react in a polymerization reaction. In addition, when either of p1 or p2 is 2 or 3, a plurality of $R^2$ present in the same benzene ring may be the same or different. In addition, in the block represented by the general formula (4), $R^1$, p1 and p2 per one phenylene group constituting the main chain may be the same or different, respectively.

Furthermore, as described above, in the method of the present invention, the block having an ion-exchange group in the polyarylene-based block copolymer preferably has a sulfonic acid group, which is a preferable ion-exchange group, and has a high degree of polymerization m in the general formula (1), and the block having an ion-exchange group preferably has a structure represented by the general formula (3), and when a linking constitution of the aromatic ring in the main chain is represented by three linking formats (3a), (3b) and (3c) determined below, TP value represented by the following formula (I), which represents a component ratio of those linking formats, is preferably 0.6 or less;

[Chemical Formula 7]

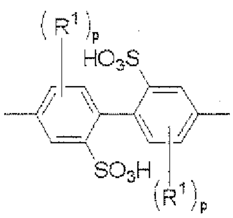

(3a)

[Chemical Formula 8]

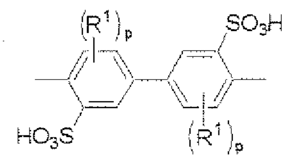

(3b)

[Chemical Formula 9]

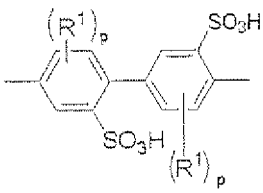

or

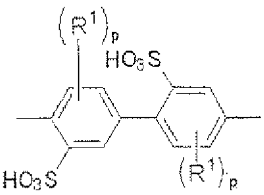

(3c)

wherein $R^1$ and p are defined similar to those in the general formula (3)),

[Mathematical Formula 1]

$$\text{TP value} = \frac{n_c}{n_a + n_b + n_c} \qquad (I)$$

wherein $n_a$ is the number of the linking constitution represented by said (3a), $n_b$ is the number of the linking constitution represented by said (3b), and $n_c$ is the number of the linking constitution represented by said (3c).

The polyarylene-based block copolymer can be obtained by the copolymerization of a compound represented by Q-$Ar^1$-Q (wherein $Ar^1$ is defined similar to that in the general formula (1), and Q represents a leaving group) and/or a compound represented by the following general formula (5) with a compound represented by the following general formula (6);

[Chemical Formula 10]

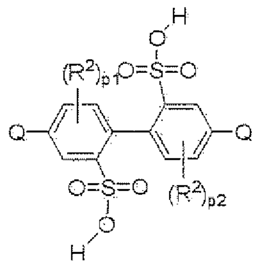

(5)

wherein $R^2$, p1 and p2 are defined similar to those in the general formula (4), Q represents a leaving group,

[Chemical Formula 11]

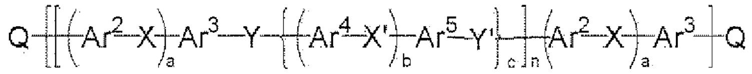

(6)

wherein $Ar^2$, $Ar^3$, $Ar^4$, $Ar^5$, a, b, c, n, X, X', Y and Y' are defined similar to those in the general formula (2), Q represents a leaving group.

The polyarylene-based block copolymer can be obtained by the copolymerization of a compound represented by Q-$Ar^1$-Q (wherein $Ar^1$ is defined similar to that in the general formula (1), and Q represents a leaving group) and/or a compound represented by the general formula (5) or a salt thereof with a compound represented by the general formula (6) in a coexistence with nickel complex.

The nickel complex preferably consists of bis(cyclooctadiene)nickel(0) and 2,2'-bipyridyl.

The nickel complex preferably consists of nickel halide and 2,2'-bipyridyl, and is also coexistent with a zinc as a reducing agent.

In the block having substantially no ion-exchange group, it is preferable in manufacturing that X and X' in the general formula (2) is a particular group, and the block having substantially no ion-exchange group is preferably a block comprising a repeating structure represented by the following general formula (2a);

[Chemical Formula 12]

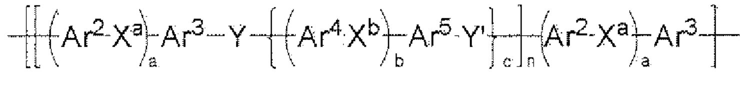

(2a)

wherein $Ar^2$, $Ar^3$, $Ar^4$, $Ar^5$, a, b, c, n, Y and Y' are defined similar to those in the general formula (2), $X^a$ and $X^b$ each independently represent a divalent group selected from a group consisting of a direct bonding, carbonyl group, sulfonyl group, 2,2-isopropylidene group, 2,2-hexafluoroisopropylidene group and 9,9-fluorenediyl group.

Furthermore, the present invention provides a solid electrolyte film produced by any one of the methods described above.

With respect to the application in a proton conductive membrane for a fuel cell, the electrolyte polymer preferably has an ion-exchange capacity of from 0.5 meq/g to 4.0 meq/g.

[Example]

Hereinafter, the present invention will be described in further detail by way of Examples.

[Determination of Yield Stress]

Yield stress values of a film obtained in Example 1 described below after water washing as well as after water washing and drying were determined according to the testing method for tensile properties of plastics described in Japanese Industrial Standards K7113. The yield stress of the film after water washing was 8 $N/mm^2$, and the yield stress of the film after water washing and drying was 40 $N/mm^2$.

[Synthesis Example of Electrolyte Polymer]

With reference to the method described in Examples 7 and 21 of WO 2007/043274 A, a polymer electrolyte was obtained, which was a block copolymer synthesized using SUMIKAEXCEL PES 5200P (made by Sumitomo Chemical Co.,Ltd.) and comprising a repeating unit represented by the following structural formula. The ion-exchange capacity of said polymer electrolyte was 2.51 meq/g, and the number-average molecular weight (Mn) and the weight-average molecular weight (Mw) measured by gel permeation chromatography (GPC) method were 174000 and 348000, respectively, in terms of polystyrene.

[Chemical Formula 13]

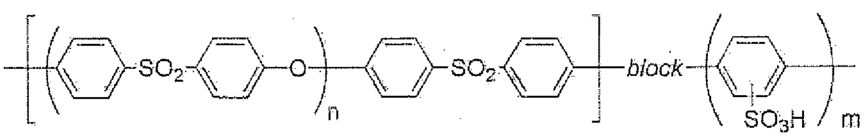

[Example 1]

The electrolyte polymer synthesized in the above-mentioned Synthesis Example was dissolved in dimethylsulfoxide (DMSO) to prepare a solution having a concentration of 8.0% by weight. The resulting solution was cast and applied on an elongated base material (PET film made by Toyobo Co.,Ltd., E5000 grade, 0.1 mm in thickness, 400 mm in width), and dried at 100°C for 36 minutes. Then, the formed film was separated from the base material. The film thickness of the separated film was 0.02 mm, and the film width was 340 mm. The separated film was washed by soaking the film in water of 23°C for 3 minutes. In the washing step, a tensile load of 5 N, that is, a tensile force of 0.015 N/mm was applied to the film by a tension cut. The film during washing was swelled with water to have the film thickness of 0.04 mm, and the tensile force per unit thickness was 0.37 $N/mm^2$. After washing, the resulting film was dried at 35'C for 2.5 minutes to obtain a solid electrolyte film having the film thickness of 0.02 mm. In the drying step, a tensile load of 7 N, that is, a tensile force of 0.021 N/mm was applied to the film by the tension cut. The tensile force per unit thickness was 1.0 $N/mm^2$. Any wrinkle was not found on the resulting solid electrolyte film.

[Example 2]

A solid electrolyte film was prepared as in Example 1 except for applying a tensile load of 9 N, that is, a tensile force of 0.026 N/mm (a tensile force per unit thickness of 1.3 $N/mm^2$) to the film in the drying step. Any wrinkle was not found on the resulting solid electrolyte film.

[Example 3]

A solid electrolyte film was prepared as in Example 1 except for applying a tensile load of 10 N, that is, a tensile force of 0.029 N/mm (a tensile force per unit thickness of 1.5 $N/mm^2$) to the film in the drying step. Any wrinkle was not found on the resulting solid electrolyte film.

[Comparative Example 1]

A solid electrolyte film was prepared as in Example 1 except for applying a tensile load of 5 N, that is, a tensile force of 0.015 N/mm to the film in the drying step. Wrinkles were found on the resulting solid electrolyte film.

[Comparative Example 2]

A solid electrolyte film was prepared as in Example 1 except for applying a tensile load of 2 N, that is, a tensile force of 0.006 N/mm to the film in the drying step. Wrinkles were found on the resulting solid electrolyte film.

[Comparative Example 3]

A solid electrolyte film was prepared as in Example 1 except for applying a tensile load of 3 N, that is, a tensile force of 0.009 N/mm to the film in the drying step. Wrinkles were found on the resulting solid electrolyte film.

## Claims

1. A method for producing a solid electrolyte film, which comprises:

   a formation step (A) in which a film comprising an electrolyte polymer is formed on a base material;
   a separation step (B) in which the film formed on the base material is separated from the base material;
   a water washing step (C) in which the film obtained in the separation step (B) is washed with water while applying a tensile force $T_c$ to the film; and
   a drying step (D) in which the film obtained in the water washing step (C) is dried while applying a tensile force $T_D$ to the film;
   **characterized in that** the tensile force $T_C$ and the tensile force $T_D$ satisfy the relationship of $T_C<T_D$.

2. The method according to claim 1, wherein the tensile force $T_C$ is from 0.0001 N/mm to 2 N/mm and the tensile force $T_D$ is from 0.001 N/mm to 10 N/mm.

3. The method according to claim 1, wherein the tensile force $T_C$ is from 0.005 N/mm to 0.03 N/mm, and the tensile force $T_D$ is from 0.01 N/mm to 0.05 N/mm.

4. The method according to claim 2, wherein a thickness of the film obtained via the water washing step (C) and a thickness of the film obtained via the drying step (D) are both in the range between 0.001 mm and 0.5 mm.

5. The method according to claim 3, wherein a thickness of the film obtained via the water washing step (C) and a thickness of the film obtained via the drying step (D) are both in the range between 0.001 mm and 0.1 mm.

6. The method according to any one of claims 1 to 5, wherein the tensile force $T_C$ and the tensile force $T_D$ are applied by a tension cut.

7. The method according to any one of claims 1 to 6, **characterized in that** the electrolyte polymer comprises a block having an ion-exchange group and a block having substantially no ion-exchange group, a main chain of said block having an ion-exchange group comprises a polyarylene structure in which a plurality of aromatic rings are directly linked and the ion-exchange group is directly bonded to the aromatic ring constituting the main chain.

8. The method according to claim 7, **characterized in that** the block having an ion-exchange group is represented by the following general formula (1);

[Chemical Formula 1]

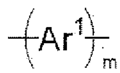 (1)

wherein m is an integer of 5 or more, $Ar^1$ represents a divalent aromatic group, the divalent aromatic group may be substituted with a fluorine atom, an alkyl group having 1 to 20 carbon atoms which may have a substituent, an alkoxy group having 1 to 20 carbon atoms which may have a substituent, an aryl group having 6 to 20 carbon atoms which may have a substituent, an aryloxy group having 6 to 20 carbon atoms which may have a substituent or an acyl group having 2 to 20 carbon atoms which may have a substituent, and at least one ion-exchange group is directly bonded to the aromatic ring constituting the main chain of $Ar^1$.

**9.** The method according to claim 7 or 8, **characterized in that** the block having substantially no ion-exchange group comprises a structural unit represented by the following general formula (2);

[Chemical Formula 2]

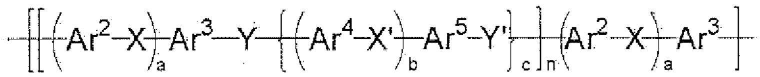 (2)

wherein a, b and c each independently represent 0 or 1, n is an integer of 5 or more, $Ar^2$, $Ar^3$, $Ar^4$ and $Ar^5$ each independently represent a divalent aromatic group, the divalent aromatic group may be substituted with an alkyl group having 1 to 20 carbon atoms which may have a substituent, an alkoxy group having 1 to 20 carbon atoms which may have a substituent, an aryl group having 6 to 20 carbon atoms which may have a substituent, an aryloxy group having 6 to 20 carbon atoms which may have a substituent or an acyl group having 2 to 20 carbon atoms which may have a substituent, X and X' each independently represent a direct bonding or a divalent group, and Y and Y' each independently represent an oxygen atom or a sulfur atom.

**10.** A solid electrolyte film produced by the method according to any one of claims 1 to 9.

## INTERNATIONAL SEARCH REPORT

International application No.
PCT/JP2010/069292

A. CLASSIFICATION OF SUBJECT MATTER
*H01B13/00*(2006.01)i, *H01B1/06*(2006.01)i, *H01M8/02*(2006.01)n, *H01M8/10* (2006.01)n

According to International Patent Classification (IPC) or to both national classification and IPC

B. FIELDS SEARCHED

Minimum documentation searched (classification system followed by classification symbols)
H01B13/00, H01B1/06, H01M8/02, H01M8/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2008-204952 A (Fuji Film Kabushiki Kaisha), 04 September 2008 (04.09.2008), claims; paragraphs [0058] to [0118], [0139] to [0146] (Family: none) | 1-10 |
| A | JP 2005-339991 A (Kaneka Corp.), 08 December 2005 (08.12.2005), claims; paragraphs [0039] to [0046] (Family: none) | 1-10 |
| A | JP 2009-146883 A (Toray Industries, Inc.), 02 July 2009 (02.07.2009), claims; paragraphs [0024] to [0030], [0034] (Family: none) | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 January, 2011 (06.01.11) | 18 January, 2011 (18.01.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/069292

C (Continuation). DOCUMENTS CONSIDERED TO BE RELEVANT

| Category* | Citation of document, with indication, where appropriate, of the relevant passages | Relevant to claim No. |
|---|---|---|
| A | JP 2008-166006 A (Toyobo Co., Ltd.), 17 July 2008 (17.07.2008), claims; paragraphs [0041] to [0049] (Family: none) | 1,10 |
| A | JP 2008-159580 A (Sumitomo Chemical Co., Ltd.), 10 July 2008 (10.07.2008), claims; paragraphs [0027] to [0046] & EP 2096646 A1 & WO 2008/066186 A1 | 7-9 |
| A | JP 2007-186608 A (JSR Corp.), 26 July 2007 (26.07.2007), claims; paragraphs [0021] to [0035] (Family: none) | 7-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008282795 A
- WO 2007043274 A